# FASCICULE DE BREVET EUROPEEN

(11) **EP 2 536 967 B1**
(45) Date de publication et mention de la délivrance du brevet: **18.06.2014**
(21) Numéro de dépôt: 11712912.2
(22) Date de dépôt: 15.02.2011
(51) Int. Cl.: B01L 3/00, F16K 15/03, F16K 15/18

(54) **DISPOSITIF A CLAPET, MONO-CORPS, MOULÉ PAR INJECTION DE MATERIAU ELASTIQUE**
AUS EINEM ELASTISCHEN MATERIAL EINSPRITZGEFORMTE EINTEILIGE VENTILVORRICHTUNG
ONE-PIECE VALVE DEVICE, INJECTION MOLDED OF ELASTIC MATERIAL

(30) Priorité: 16.02.2010 FR 1051080
(43) Date de publication de la demande: 26.12.2012
(73) Titulaire: Biomérieux, 69280 Marcy L'etoile (FR)
(72) Inventeur: FOUCAULT, Frédéric, F-69290 Craponne (FR)
(86) Numéro de dépôt international: PCT/FR2011/050319
(87) Numéro de publication internationale: WO 2011/101588

(56) Documents cités:
- EP-A1- 1 407 820
- DE-B3-102007 048 556
- GB-A- 2 342 427
- US-A1- 2003 164 559
- US-A1- 2007 009 390

## Description

Le domaine technique de la présente invention est celui des dispositifs destinés à venir assurer l'étanchéité d'un conteneur, tel qu'un bouchon, ou venir assurer l'étanchéité entre deux espaces volumiques distincts, telle qu'une vanne.

Dans les systèmes d'analyse biologique, en particulier de diagnostic in vitro, il est traditionnel d'utiliser des tubes jetables en matière plastique, destinés à recevoir différents types de liquide et plus particulièrement des liquides biologiques, tels que du sang total, du sérum, de l'urine, du liquide céphalo-rachidien ou encore des liquides articulaires.

Si ces tubes peuvent être bouchés à l'aide de bouchons traditionnels en matière plastique dure pour leur transport, l'utilisation de ces tubes à l'intérieur des systèmes susévoqués, oblige les manipulateurs à enlever les bouchons avant d'installer lesdits tubes dans la machine. Cette manipulation engendre un risque potentiel de contamination du manipulateur par les liquides contenus dans les tubes. Le manipulateur peut également constituer une source de contamination des liquides biologiques et donc ainsi fausser les résultats d'analyse.

Un remède à cette problématique consiste à utiliser des bouchons en matériau à base de caoutchouc naturel ou synthétique, communément appelés septums, qui permettent le passage d'une aiguille métallique par percement grâce à la rigidité et au tranchant de cette dernière et qui, de par leurs propriétés d'élasticité, se referment une fois l'aiguille retirée. Néanmoins, un tel bouchon n'est pas adapté aux dispositifs de pipetage utilisant des cônes jetables en plastique. En effet, de par la taille importante de son embout, le cône n'est pas en mesure de percer le bouchon, sans pression excessive susceptible d'entraîner une détérioration du matériel.

Pour permettre le passage des cônes plastiques et *a fortiori* d'aiguilles métalliques sans dévissage du bouchon, d'autres dispositifs ont été développés.

On peut citer les bouchons du type « cross-slit valves », comme ceux produits par les sociétés Minivalve (CR 150.001, CR270.001...) et Vernay (VA4394, VA5904...).Ces bouchons sont prévus à l'origine pour permettre le passage de trocart. Ces bouchons sont injectés puis coupés en croix.

Ces bouchons sont très souvent en silicone ou caoutchouc réticulé. La mise en oeuvre des silicones ou des caoutchoucs nécessite des procédés de production particuliers, afin de permettre la réticulation des matériaux directement dans le moule. Ceci entraîne un allongement non négligeable des temps de cycle. Enfin, si une reprise d'usinage est nécessaire, telle qu'une découpe dans la pièce réalisée (comme une découpe en croix dans le fond du bouchon), ceci a un impact direct sur le coût de fabrication et donc le prix de revient du produit.

Ces mêmes problèmes se posent également avec les dispositifs de conception proche que sont les vannes du type « cross-slit » ou du type « duckbill », utilisées pour transférer un fluide entre deux espaces volumiques distincts.

Par ailleurs, ces vannes de l'art antérieur basées sur le principe de la déformation d'un matériau souple ont toutes le même problème, à savoir un passage libre limité qui est proportionnel au débit, mais qui entraîne des pertes de charge importantes.

Il existe d'autres types de bouchons constitués de plusieurs pièces assemblées ou co-injectées. Il s'agit en général d'une partie centrale en élastomère et d'une partie périphérique en thermoplastique dur, cette dernière permettant une fixation par clipsage ou vissage du bouchon sur le dispositif à obturer.

Cependant, l'injection bi-matière (ou co-injection) est un procédé lourd technologiquement, nécessitant notamment des moules spéciaux, des presses d'injection spéciales. Les pièces ainsi produites sont donc nettement plus chères que celles réalisées en mono-injection. Par ailleurs, l'assemblage est une étape supplémentaire contribuant aussi à renchérir le prix de revient du produit.

Tous ces dispositifs, bouchons ou vannes, sont ainsi chers à produire pour le marché du consommable jetable. En effet, un consommable n'est souvent utilisé qu'une seul fois en analyse biologique. Par conséquent, son prix de revient industriel doit être le plus bas possible.

Le document EP-A-1 407 820 décrit un septum à clapet destiné à être positionné sur un tube. Le clapet est en matériau plastique est relié à un joint circulaire au moyen d'un ressort à lame. Le clapet de forme oblongue alors que la section du conteneur est elle de forme circulaire, empêche une remontée complète du clapet. Une telle architecture confère donc audit clapet une étanchéité limitée. Ce qui peut être un inconvénient majeur pour certaines utilisations dans lesquelles l'étanchéité est un élément crucial.

Le document GB-A-2 342 427 décrit un tuyau présentant un clapet qui est solidaire du tuyau au moyen d'une charnière, se présentant sous la forme d'une lame qui est déformée lorsque le clapet est positionné à l'extrémité du tuyau. Le clapet présente par ailleurs une boucle sur sa partie périphérique qui vient se fixer sur un téton disposé sur la paroi extérieur du tuyau, et empêcher que le clapet ne se désolidarise du tuyau L'architecture permet au clapet de venir s'écarter de l'embout du tuyau de par sa constitution flexible pour permettre à un liquide coulant dans le tuyau de sortir de ce dernier. Toutefois, une telle architecture de clapet n'est nullement adaptée pour être positionnée sur un conteneur dans lequel il est nécessaire de faire pénétrer un dispositif de pipetage.

Il ressort de cet état de la technique qu'il n'existe pas de bouchon combinant à la fois une praticité et simplicité d'utilisation, permettant en particulier lorsqu'il est positionné sur une tube d'analyse contenant un échantillon liquide, de pouvoir prélever facilement une fraction de l'échantillon à l'aide d'un dispositif de pipetage ; combiné à une simplicité de conception n'entrainant pas des coûts prohibitifs de production et donc un prix de revient incompatible avec un usage unique.

Il ressort également de cet état de la technique qu'il n'existe pas non plus de vannes, pratiques et simples d'utilisation, combinant une ouverture totale et un système de clapet anti-retour efficace, de telles vannes devant présentées un coût de production limité, compatible avec un usage unique.

Les objectifs de la présente invention sont donc de répondre à ces manques en proposant un dispositif mono-matériau et mono-corps, simple de conception, facile à produire, pouvant être utilisé :
- Soit comme bouchon afin de permettre à un dispositif de pipetage d'accéder aisément à l'intérieur d'un tube sur lequel le bouchon est placé, tout en assurant une parfaite étanchéité aux liquides dudit tube
- Soit comme vanne afin de permettre le transfert efficace d'un liquide entre deux espaces volumiques distincts, qu'il s'agisse de tubulures ou de conteneurs.

Ces objectifs parmi d'autres sont remplis par la présente invention qui concerne en premier lieu un dispositif à clapet du type mono-corps, en matériau élastique, séparant deux espaces volumiques distincts, ledit dispositif comportant :
a) Un corps, sensiblement cylindrique, présentant un conduit traversant,
b) Un clapet venant obturer la lumière du conduit traversant traversant dudit corps (12), lorsque le dispositif (10) est en position fermée, ledit clapet (14) étant positionné dans l'espace intérieur dudit corps (12) ;
c) Un bras reliant le corps dudit dispositif audit clapet, ledit bras étant en position élastique contrainte, quelle que soit la position du clapet.

Selon un mode particulier de réalisation du dispositif selon l'invention, le bras relie le corps dudit dispositif audit clapet au travers du conduit traversant dudit corps. Ceci est réalisé par l'extérieur dudit dispositif.

Avantageusement, le matériau élastique est pris dans le groupe comprenant : les élastomères thermoplastiques ; les élastomères réticulés ou vulcanisés ; les silicones ; les fluorosilicones ; les élastomères fluorés ; les polyisoprènes ; les caoutchoucs naturels, de butyl ou de nitrile ; les polymères fluorocarbonés.

Selon un mode particulier de réalisation du dispositif, le clapet est sensiblement plan.

Selon un mode préférentiel de réalisation, le clapet du dispositif comporte des moyens de déformation, facilitant la déformation dudit clapet.

Selon un mode particulier de réalisation, le corps du dispositif comporte au moins une lèvre périphérique.

Selon un mode particulier de réalisation du dispositif selon l'invention, le clapet comporte des moyens destinés à faciliter le glissement d'un objet permettant l'ouverture dudit clapet.

Avantageusement, le corps du dispositif présente une forme apte à lui permettre de venir se positionner sur un conteneur.

Selon une alternative, le corps du dispositif présente une forme apte à lui permettre de venir se positionner à l'interface entre un conteneur source et un conteneur de destination ou entre une tubulure amont et une tubulure avale.

Un autre objet de la présente invention concerne l'utilisation du dispositif à titre de bouchon.

Un autre objet de la présente invention concerne l'utilisation du dispositif à titre de vanne.

Un autre objet de la présente invention concerne un procédé de transfert d'un fluide entre un espace volumique source et un espace volumique de destination, les deux espaces volumiques étant séparés par un dispositif selon l'invention, utilisé à titre de vanne, ledit procédé comprenant les étapes consistant à :
a) Exercer, par l'intermédiaire du fluide à transférer, une pression sur le clapet de la vanne, ladite pression étant suffisante pour permettre l'ouverture dudit clapet, entraînant une mise sous contrainte élastique du bras de ladite vanne ;
b) Maintenir la pression pendant un temps suffisant pour permettre le transfert du volume de fluide voulu ;
c) Annuler la pression afin d'entraîner le retour du clapet en position fermée, grâce à la force de rappel élastique exercée par le bras de ladite vanne.

Un autre objet de la présente invention concerne un procédé de prélèvement d'une fraction d'un échantillon liquide contenu dans un conteneur, obturé par un dispositif selon l'invention, utilisé à titre de bouchon, ledit procédé comprenant les étapes consistant à :
a) Exercer une pression à l'aide d'un dispositif d'aspiration/refoulement sur le clapet du bouchon, se trouvant en position fermée, afin de permettre l'ouverture de ce dernier, entraînant une mise sous contrainte élastique du bras dudit bouchon ;
b) Faire pénétrer le dispositif d'aspiration/refoulement à l'intérieur du conteneur, jusqu'à ce que l'embout du dispositif d'aspiration/refoulement, soit immergé dans l'échantillon liquide ;
c) Aspirer un volume déterminé dudit échantillon liquide ;
d) Retirer le dispositif d'aspiration/refoulement, de sorte que la pression exercée sur le clapet se trouve annulée, entraînant le retour du clapet en position fermée, grâce à la force de rappel élastique exercée par le bras dudit bouchon.

Un autre objet de la présente invention concerne un procédé de dispense d'un liquide à l'intérieur d'un conteneur obturé par un dispositif selon l'invention, utilisé à titre de bouchon, ledit liquide étant contenu dans un dispositif d'aspiration/refoulement, ledit procédé comprenant les étapes consistant à :
a) Exercer une pression à l'aide d'un dispositif d'aspiration/refoulement sur le clapet du bouchon, se trouvant en position fermée, afin de permettre l'ouverture de ce dernier, entraînant une mise sous contrainte élastique du bras dudit bouchon ;
b) Faire pénétrer le dispositif d'aspiration/refoulement à l'intérieur du conteneur ;
c) Dispenser à l'intérieur du conteneur, un volume déterminé du liquide contenu dans le dispositif d'aspiration/refoulement ;
d) Retirer le dispositif d'aspiration/refoulement du conteneur, de sorte que la pression exercée sur le clapet se trouve annulée, entraînant le retour du clapet en position fermée, grâce à la force de rappel élastique exercée par le bras dudit bouchon.

Les buts et avantages de la présente invention seront mieux compris à la lumière de la description détaillée et nullement limitative de l'invention, qui suit, faite en référence au dessin dans lequel :
La figure 1 représente le dispositif selon la présente invention, sous forme de bouchon selon une vue en perspective, dans sa configuration initiale non fonctionnelle.
La figure 2 représente le dispositif selon la présente invention, sous forme de bouchon selon une vue en perspective, dans sa configuration fonctionnelle, avec le clapet en position fermée.
La figure 3 représente le dispositif selon la présente invention, sous forme de bouchon selon une vue en coupe transversale selon l'axe A-A obtenue à partir de la figure 2, dans sa configuration fonctionnelle, avec le clapet en position fermée.
La figure 4 représente le dispositif selon la présente invention, sous forme de bouchon selon une vue en perspective, dans sa configuration fonctionnelle, avec le clapet en position ouverte.
La figure 5 représente le dispositif selon la présente invention, sous forme de bouchon selon une vue en coupe transversale selon l'axe B-B obtenue à partir de la figure 4, dans sa configuration fonctionnelle, avec le clapet en position ouverte.
La figure 6 représente le dispositif selon la présente invention, sous forme de bouchon, positionné sur un conteneur du type tube d'analyse, dans lequel est plongé un dispositif d'aspiration/refoulement.

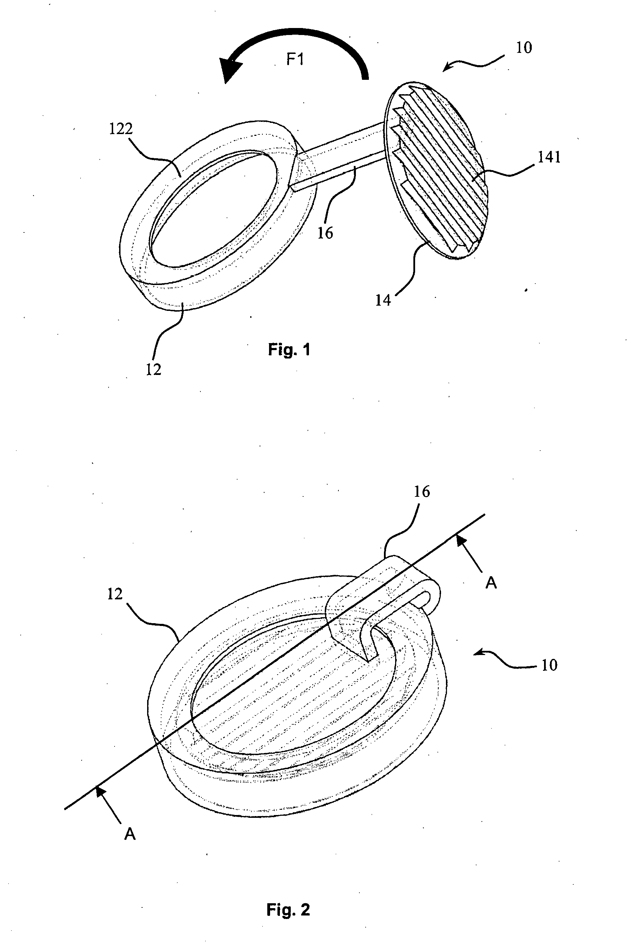

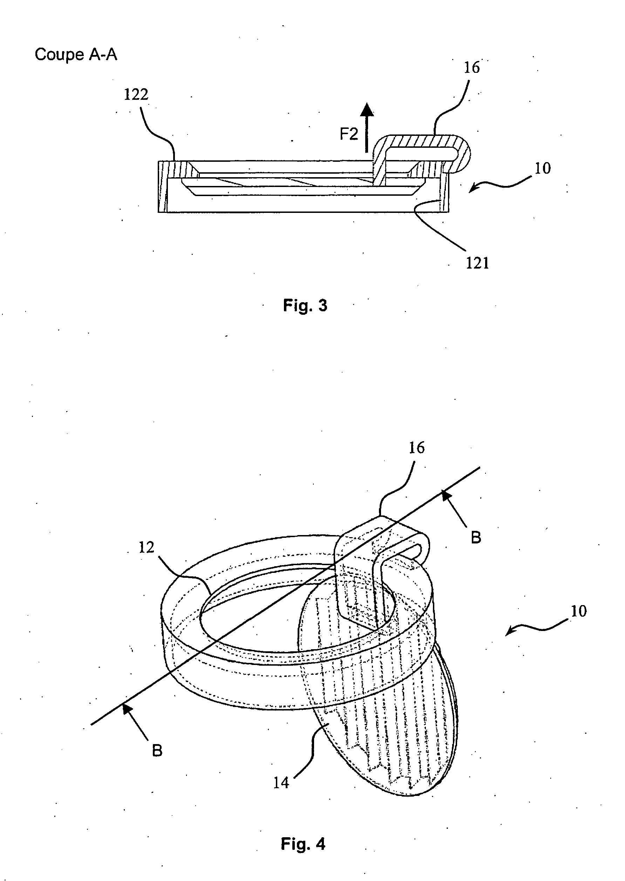

Conformément à la figure 1, le dispositif selon l'invention sous forme de bouchon 10 est constitué de trois parties distinctes. En premier lieu, un corps 12 de forme sensiblement cylindrique, avec une section transversale circulaire. Ce cylindre est constitué d'une paroi verticale cylindrique 121 sensiblement verticale. A l'une des ses extrémités, le corps 12 présente un retour sous forme d'une bande circulaire 122, perpendiculaire à la paroi 121 du corps, réduisant le diamètre interne du cylindre au niveau de cette extrémité. Ceci est bien visible sur la figure 3.

Le bouchon 10 comporte par ailleurs un clapet 14. Ce clapet 14 a une forme sensiblement tronconique. Le diamètre du clapet 14 est inférieur au diamètre du corps 12 dans sa zone la plus large. Par contre, il est supérieur au diamètre du corps au niveau du retour 122, de sorte que le clapet peut librement se déplacer en rotation à l'intérieur du corps 12 dans l'espace délimité par la paroi 121 et venir en appui à plat contre le retour 122. Ceci peut s'observer sur les figures 2 et 3.

Le clapet 14 comporte sur l'une de ses faces des découpes, sous forme de stries 141 rectilignes, parallèles les unes aux autres. Ces stries 141 ont ici une section transversale en « V ». Toutefois, des stries présentant une section transversale de forme différente, telle qu'en « U » ou en créneaux peuvent également être aménagées. Les stries 141 permettent au clapet 14 de présenter des propriétés de déformation améliorées, localisées au niveau du fond de ces dernières où l'épaisseur de matière est nettement réduite. Il est à noter qu'un damier de stries est également envisageable. Ces propriétés sont particulièrement intéressantes pour permettre au clapet d'épouser la forme de la paroi du conteneur sur lequel il est positionné. Ceci sera mieux explicité *infra.*

Le bouchon 10 comporte enfin un bras 16 ayant ici la forme d'un parallélépipède rectangle. Ce bras est solidaire du corps 12 par l'un de ces côtés et solidaire du clapet 14 par le côté opposé. Ce bras 16 joue à la fois le rôle de lien et d'articulation entre le corps 12 et le clapet 14.

Le bouchon 10 est du type mono-corps. Il est obtenu préférentiellement par le biais d'un procédé d'injection d'élastomère thermoplastique traditionnel. De façon avantageuse, le bouchon 10 a été conçu pour pouvoir être réalisé au moyen d'un procédé d'injection le plus simple possible, de manière à limiter au maximum les coûts de production et donc le prix de revient industriel dudit bouchon. Ainsi, les moules d'injection ne comportent préférentiellement aucune pièce mobile du type tiroir. La matériau moulé étant souple, il permet dans certains cas de ne considérer que peu d'éjecteurs, ou même un seul injecteur principal, la pièce se démoulant par déformation globale.

L'injection d'élastomère thermoplastique présente l'avantage de pouvoir être mise en oeuvre à l'aide d'un outillage et d'un processus moins complexes qu'un procédé d'injection d'un élastomère nécessitant une étape de réticulation à chaud. Le gain de temps dans le cycle de production est donc significatif. Enfin, cet élastomère thermoplastique peut par ailleurs être recyclé par une filière *ad hoc,* contrairement aux élastomères réticulés.

De tels élastomères thermoplastiques présentent des propriété physico-chimiques et mécaniques des plus intéressantes. Leur coût est moindre par rapport aux élastomères réticulés. Ce qui en fait des matériaux de choix.

Parmi les matériaux élastomères thermoplastiques utilisables pour réaliser le dispositif selon la présente invention, on peut citer par exemple les matériaux commercialisés par la société Arkema sous la marque Pebax® (copolymères à base de polyéthers et d'amides), par la société ExxonMobil Chemical sous la marque Santoprene® (mélanges d'éthylène propylène diène monomère et de polypropylène), par la société DMS sous la marque Arnitel® (copolymère polyester) ou encore par la société Dupont sous la marque Hytrel® (élastomère thermoplastique polyester).

Ainsi, la configuration du bouchon 10 conformément à la figure 1 est une configuration plane, telle qu'obtenue à l'issue de l'étape de démoulage dudit bouchon. Dans cette configuration, le bouchon n'est nullement fonctionnel.

Afin de rendre le bouchon fonctionnel, il est nécessaire de procéder à un changement de conformation de ce dernier. Pour ce faire, un mouvement de rotation du clapet 14 est réalisé conformément à la flèche F1 de la figure 1, par torsion du bras 16, de sorte que le clapet se retrouve en aplomb du corps 12. Le clapet 16 est alors passé en force au travers de la lumière du conduit traversant dudit corps 12, au-delà du retour 122. Cette étape est facilitée par la capacité de déformation du clapet 14, améliorée par la présence des stries 141. Le bouchon se retrouve alors dans la configuration représentée sur la figure 2 qui est la configuration fonctionnelle. Dans cette configuration, le chemin suivi par le bras 16 reliant le corps 12 au clapet 16, va de la paroi verticale circulaire 121 du corps 12 pour venir traverser par l'extérieur la lumière du conduit traversant dudit corps 12.

Selon cette configuration, le clapet 14 vient en appui contre la face intérieur du retour 122, tel que représenté sur la figure 3. On constate que le diamètre du clapet au niveau de la surface en contact avec le retour 122 est sensiblement plus grand que le diamètre de la lumière du corps 12 au niveau dudit retour 122, de sorte que le clapet ne peut pas ressortir du corps, sauf à chercher volontairement à le faire ressortir.

Dans cette configuration, le bras 16 est maintenu en torsion et sous contrainte. Les propriétés d'élasticité du bras 16 permettent à ce dernier d'exercer sur le clapet 14 une force qui tend à plaquer ledit clapet 14 contre le retour 122, conformément à la flèche F2, assurant ainsi l'étanchéité du bouchon. Dans cette configuration, qui est la configuration dans laquelle le clapet 14 est fermé, le bouchon 10 est dans une configuration stable, à savoir que la force exercée par le bras 16 décrite ci-dessus et la force opposée exercée par le retour 122 sur le clapet 14 s'annulent.

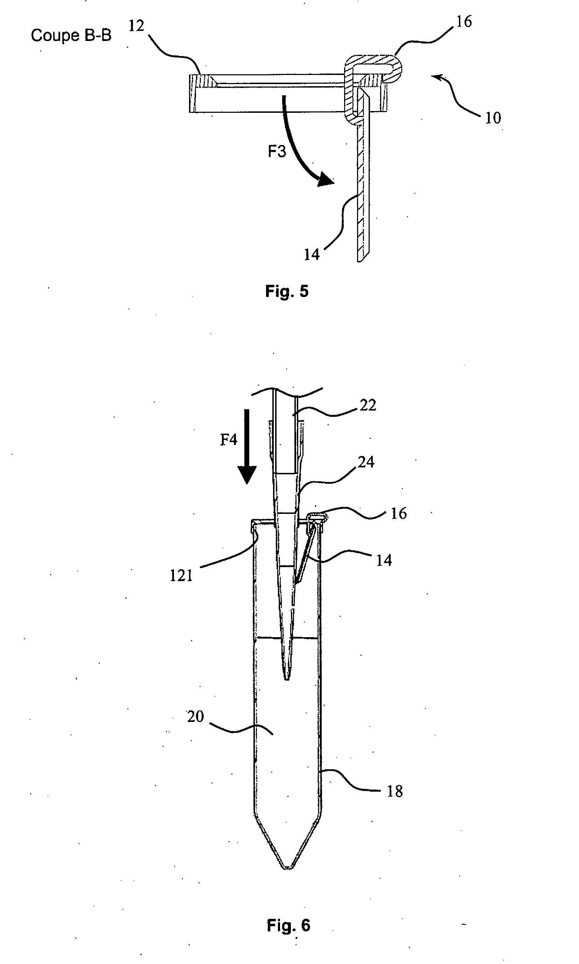

Les figures 4 à 6 représentent le bouchon 10 selon l'invention dans la configuration dans laquelle le clapet 14 est ouvert. Sur les figures 4 et 5, le bouchon 10 est représenté dans une configuration dans laquelle l'ouverture du clapet 14 est quasi-maximale. En effet, comme on le voit bien sur ces figures, le plan dans lequel se trouve le clapet 14 est sensiblement perpendiculaire au plan du retour 122. Il est à noter que l'ouverture du clapet 14 ne peut être obtenue que par l'action d'une force extérieure représentée sur la figure 5, par la flèche F3. En effet, dans cette configuration, la contrainte élastique exercée sur le bras 16 est quasi-maximale.

La figure 6 représente le bouchon 10 en « configuration ouverte » dans le cas d'une utilisation traditionnelle. En effet, le bouchon 10 est ici positionné sur un tube d'analyse 18 sensiblement cylindrique à section circulaire, de sorte que la face externe de la paroi du tube 18 dans sa partie supérieure est en contact avec la face interne de la paroi 121 du bouchon. Par ailleurs, le retour 122 du bouchon vient en appui sur la tranche du tube 18 au niveau de l'orifice de ce dernier. La matériau élastomère thermoplastique préférentiellement utilisé par réaliser le bouchon selon l'invention présente ici un avantage particulier, à savoir qu'il permet d'assurer de par ses propriétés d'élasticité, une bonne accroche du bouchon 12 sur le tube 18, un fois le bouchon 12 positionné en force sur le tube 18. L'étanchéité du tube 18 est alors assurée.

Le tube 18 contient un liquide 20, qui est amené à être prélevé ou dans lequel on est amené à dispenser un autre liquide. Pour ce faire, un dispositif d'aspiration/refoulement 22, partiellement représenté sur le figure 6, comportant à son extrémité un cône de prélèvement jetable 24 en plastique, est mis en appui contre le clapet 14 du bouchon 10 selon un mouvement translatif vertical conformément à la flèche F4. La force exercée par le dispositif d'aspiration/refoulement 22 sur le clapet 14 par l'intermédiaire du cône de prélèvement 24 entraîne l'ouverture du clapet 14, par mise en contrainte élastique du bras 16. L'ouverture du clapet 14 permet au cône de prélèvement de traverser le bouchon et d'entrer dans le tube 18. Bien entendu, toute cette séquence est réalisée de manière continue, lors du déplacement vertical translatif du dispositif d'aspiration/refoulement 22. Durant sa descente dans le tube, le cône de prélèvement 24 assure la force nécessaire sur le clapet 14 pour le maintenir ouvert sous contrainte.

Le déplacement est interrompu lorsque le cône jetable entre en contact avec le liquide. A cette fin, lorsque le dispositif d'aspiration/refoulement 22 est un dispositif automatique, partie intégrante d'un système automatique d'analyse biologiques, il est judicieux de disposer sur ledit système d'un moyen de détection du liquide pour éviter que le cône ne trempe trop en profondeur dans le liquide. De tels moyens sont bien connus et largement utilisés dans de tels systèmes. Il est cependant nécessaire de s'assurer que le moyen de détection de liquide ne soit pas activé lors de l'entrée en contact du cône de prélèvement 24 liquide avec le clapet 14 du bouchon 10, entraînant l'arrêt du mouvement vertical translatif du dispositif d'aspiration/refoulement 22.

Une fois le cône de prélèvement 24 en contact avec le liquide 20, le dispositif d'aspiration/refoulement 22 peut effectuer soit l'aspiration d'une fraction du liquide 20, soit refouler un volume d'un autre liquide prélevé précédemment et contenu dans le cône de prélèvement 24. Il est à noter que dans le cas d'un refoulement de liquide, il n'est pas nécessaire que le cône de prélèvement 24 entre encontact avec le liquide 20.

Une fois cette étape fluidique réalisée, le dispositif d'aspiration/refoulement 22 engage alors un mouvement verticale translatif inverse jusqu'à ce que le cône de prélèvement 24 se retrouve à l'extérieur du tube 18. La force exercée sur le clapet 14 par le cône de prélèvement 24 lors de la remontée du dispositif d'aspiration/refoulement 22 permet de maintenir le clapet 14 ouvert sous contrainte et ce, jusqu'à ce que le cône de prélèvement 24 et le clapet 14 ne soit plus en contact que par l'extrémité dudit cône de prélèvement 24. Dès ce moment, grâce à la force élastique de rappel exercée par le bras 16 sur le clapet 14, ce dernier engage sa remontée de manière concomitante à la remontée du cône de prélèvement 24, tout en restant en contact avec l'extrémité dudit cône. Avantageusement, le clapet 14 peut comporter sur sa face supérieure, à savoir la face opposée à la face portant les stries, un moyen (non représenté) destiné à limiter les frottements entre le cône de prélèvement 24 et ledit clapet 14, lorsque ledit cône de prélèvement 24 est sorti du tube. Un tel moyen peut être une structuration particulière de la face supérieure rendant cette dernière granuleuse. Ce moyen peut être également un bossage sur la face supérieure du clapet 14, limitant ainsi la surface de contact entre le cône de prélèvement 24 et le clapet 14.

La remontée du clapet 14 selon un mouvement sensiblement rotatif s'achève lorsque le clapet revient en position fermée, à savoir en butée contre le retour 122 du corps 12, conformément à ce qui représenté sur les figures 2 et 3. Le bouchon est alors fermé et l'étanchéité du bouchon 12 est alors à nouveau assurée, permettant son transport sans risque de fuite de liquide.

Il est bien évident que toutes les étapes décrites ci-dessus peuvent être réalisées manuellement par un technicien manipulateur qui tient en main un dispositif d'aspiration/refoulement, telle qu'une pipette ou une seringue.

Par ailleurs, dans une variante de l'invention, il est envisageable de séparer la fonction de pression sur le clapet, de la fonction d'aspiration / refoulement. Pour ce faire, il est possible de recourir à un dispositif indépendant du dispositif d'aspiration/refoulement 22, ledit dispositif venant exercer sur le clapet 14 une pression suffisante pour permettre une ouverture suffisante de ce dernier pour le passage du cône de prélèvement 24. Un tel dispositif indépendant peut être par exemple un doigt mécanique, pouvant être mû verticalement.

Le bouchon selon l'invention peut se substituer à tous les bouchons ou couvercles positionner sur un conteneur et qu'il est nécessaire de retirer pour atteindre ou prélever le contenant liquide, dès lors qu'un niveau optimal d'étanchéité n'est pas requis. De part sa configuration, l'orifice libéré lors de l'ouverture du clapet est très important, ce qui permet le passage de gros dispositifs de d'aspiration/refoulement, qui peuvent être relativement souples et non contondants, limitant ainsi les risques de blessures.

Un tel bouchon est par ailleurs adaptable à de nombreux consommables, dispositifs ou contenants requérants :
- un état stable en position fermée
- une position ouverte par une action mécanique extérieure
- une fermeture automatique en jouant sur la force élastique de rappel du matériau lui-même lorsque l'action mécanique extérieure s'efface.

Le bouchon selon l'invention peut également s'adapter à des géométries de conteneurs très différentes :
- en diamètre ou largeur
- en profondeur
- en type de matériaux : polymères, métaux, verre, céramique, silicium...

La force élastique de rappel exercée par le bras peut avantageusement être adaptée à l'utilisation souhaitée en jouant sur la forme de ce dernier.

Dans un mode de réalisation plus élaboré, il peut être envisageable de fabriquer le bouchon simultanément au conteneur qu'il doit fermer. En effet, dans le cas d'un conteneur, tel qu'un tube, réalisé en moulage par injection, il est tout à fait possible d'envisager de surmouler le bouchon sur le conteneur lors de la fabrication de ce dernier. Il s'agit alors d'un procédé d'injection bi-matières. Le bouchon selon l'invention et le conteneur forment alors un dispositif monobloc.

Il est également envisageable de changer la configuration du dispositif selon l'invention afin de l'utiliser comme vanne à clapet, dans le cadre de gestion de fluides (gaz, liquides). Dans cette configuration, la vanne est positionnée entre deux espaces volumiques entre lesquels un fluide doit être transféré. Dans ce cas, c'est la pression exercée en amont par le fluide, qui force l'ouverture de la vanne, en minimisant la perte de charge du fait du diamètre du clapet. En cas de dépression ou d'inversion de flux, le clapet se referme rapidement.

## Revendications

1. Dispositif (10) à clapet du type mono-corps, en matériau élastique, séparant deux espaces volumiques distincts, ledit dispositif comportant :
a) Un corps (12) sensiblement cylindrique, présentant un conduit traversant,
b) Un clapet (14) venant obturer la lumière du conduit traversant dudit corps (12), lorsque le dispositif (10) est en position fermée, ledit clapet (14) étant positionné dans l'espace intérieur dudit corps (12),
c) Un bras (16) reliant le corps (12) dudit dispositif audit clapet (14), ledit bras (16) étant en position élastique contrainte, quelle que soit la position dudit clapet (14).

2. Dispositif selon la revendication précédente, dans lequel le bras (16) relie le corps (12) dudit dispositif audit clapet (14) au travers du conduit traversant dudit corps (12).

3. Dispositif (10) selon l'une des revendications précédentes, dans lequel le matériau élastique est pris dans le groupe comprenant : les élastomères thermoplastiques ; les élastomères réticulés ou vulcanisés ; les silicones ; des fluorosilicones ; les élastomères fluorés ; les polyisoprènes ; les caoutchoucs naturels, de butyl ou de nitrile ; les polymères fluorocarbonés.

4. Dispositif (10) selon l'une des revendications précédentes, dans lequel le clapet (14) est sensiblement plan.

5. Dispositif (10) selon l'une des revendications précédentes, dans lequel le clapet (14) comporte des moyens de déformation (141), facilitant la déformation dudit clapet (14).

6. Dispositif (10) selon l'une des revendications précédentes, dans lequel le corps (12) comporte au moins une lèvre périphérique (122).

7. Dispositif (10) selon l'une des revendications précédentes, dans lequel le clapet (14) comporte des moyens destinés à faciliter le glissement d'un objet permettant l'ouverture dudit clapet.

8. Dispositif (10) selon l'une des revendications précédentes, dont le corps (12) présente une forme apte à lui permettre de venir se positionner sur un conteneur.

9. Dispositif (10) selon l'une des revendications 1 à 7, dont le corps (12) présente une forme apte à lui permettre de venir se positionner à l'interface entre un conteneur source et un conteneur de destination ou entre une tubulure amont et une tubulure aval.

10. Utilisation d'un dispositif (10) selon l'une des revendications 1 à 8, à titre de bouchon.

11. Utilisation d'un dispositif (10) selon l'une des revendications 1 à 7 et 9, à titre de vanne.

12. Procédé de transfert d'un fluide entre un espace volumique source et un espace volumique de destination, les deux espaces volumiques étant séparés par dispositif (10) selon l'un des revendications 1 à 7 et 9, utilisé à titre de vanne, ledit procédé comprenant les étapes consistant à :
a) Exercer, par l'intermédiaire du fluide à transférer, une pression sur le clapet (14) de la vanne suffisante pour permettre l'ouverture dudit clapet (14), entraînant une mise sous contrainte élastique du bras (16) de ladite vanne ;
b) Maintenir la pression pendant un temps suffisant pour permettre le transfert du volume de fluide voulu;
c) Annuler la pression afin d'entraîner le retour du clapet (14) en position fermée, grâce à la force de rappel élastique exercée par le bras (16) de ladite vanne.

13. Procédé de prélèvement d'une fraction d'un échantillon liquide contenu dans un conteneur, obturé par un dispositif (10) selon l'une des revendications 1 à 8, utilisé à titre de bouchon, ledit procédé comprenant les étapes consistant à :
a) Exercer une pression à l'aide d'un dispositif d'aspiration/refoulement sur le clapet (14) du bouchon, se trouvant en position fermée, afin de permettre l'ouverture de ce dernier, entraînant une mise sous contrainte élastique du bras (16) dudit bouchon ;
b) Faire pénétrer le dispositif d'aspiration/refoulement à l'intérieur du conteneur, jusqu'à ce que l'embout du dispositif d'aspiration/refoulement, soit immergé dans l'échantillon liquide.
c) Aspirer un volume déterminé dudit échantillon liquide ;
d) Retirer le dispositif d'aspiration/refoulement ou d'insertion du conteneur, de sorte que la pression exercée sur le clapet (14) se trouve annulée, entraînant le retour du clapet (14) en position fermée, grâce à la force de rappel élastique exercée par le bras (16) dudit bouchon.

14. Procédé de dispense d'un liquide à l'intérieur d'un conteneur obturé par un dispositif (10) selon l'une des revendications 1 à 8, utilisé à titre de bouchon , ledit liquide étant contenu dans un dispositif d'aspiration/refoulement, ledit procédé comprenant les étapes consistant à :
a) Exercer une pression à l'aide d'un dispositif d'aspiration/refoulement sur le clapet (14) du bouchon, se trouvant en position fermée, afin de permettre l'ouverture de ce dernier, entraînant une mise sous contrainte élastique du bras (16) dudit bouchon ;
b) Faire pénétrer le dispositif d'aspiration/refoulement à l'intérieur du conteneur ;
c) Dispenser à l'intérieur du conteneur, un volume déterminé du liquide contenu dans le dispositif d'aspiration/refoulement ;
d) Retirer le dispositif d'aspiration/refoulement du conteneur, de sorte que la pression exercée sur le clapet (14) se trouve annulée, entraînant le retour du clapet (14) en position fermée, grâce à la force de rappel élastique exercée par le bras (16) dudit bouchon.

## Patentansprüche

1. Einstückige Vorrichtung (10) mit Ventilklappe aus elastischem Material, die zwei verschiedene Volumenräume trennt, wobei die Vorrichtung aufweist:
a) einen im Wesentlichen zylindrischen Körper (12), der einen Durchgangskanal aufweist,
b) eine Ventilklappe (14), die die Öffnung des Durchgangskanals des Körpers (12) verschließt, wenn die Vorrichtung (10) in der geschlossenen Stellung ist, wobei die Ventilklappe (14) im Innenraum des Körpers (12) angeordnet ist,
c) einen Arm (16), der den Körper (12) der Vorrichtung mit der Ventilklappe (14) verbindet, wobei der Arm (16) unabhängig von der Stellung der Ventilklappe (14) in einer gespannten elastischen Stellung ist.

2. Vorrichtung nach dem vorhergehenden, Anspruch, wobei der Arm (16) den Körper (12) der Vorrichtung durch den Durchgangskanal des Körpers (12) hindurch mit der Ventilklappe (14) verbindet.

3. Vorrichtung (10) nach einem der vorhergehenden Ansprüche, wobei das elastische Material aus der Gruppe genommen wird, die enthält: die thermoplastischen Elastomere; die vernetzten oder vulkanisierten Elastomere; die Silicone; Fluorsilicone; die Fluorelastomere; die Polyisoprene; die natürlichen, Butyl- oder NitrilKautschuke, die fluorkohlenwasserstoffhaltigen Polymere.

4. Vorrichtung (10) nach einem der vorhergehenden Ansprüche, wobei die Ventilklappe (14) im Wesentlichen eben ist.

5. Vorrichtung (10) nach einem der vorhergehenden Ansprüche, wobei die Ventilklappe (14) Verformungseinrichtungen (141) aufweist, die die Verformung der Ventilklappe (14) erleichtern.

6. Vorrichtung (10) nach einem der vorhergehenden Ansprüche, wobei der Körper (12) mindestens eine Umfangslippe (122) aufweist.

7. Vorrichtung (10) nach einem der vorhergehenden Ansprüche, wobei die Ventilklappe (14) Einrichtungen aufweist, die dazu bestimmt sind, das Gleiten eines die Öffnung der Ventilklappe erlaubenden Gegenstands zu erleichtern.

8. Vorrichtung (10) nach einem der vorhergehenden Ansprüche, deren Körper (12) eine Form aufweist, die es ihr ermöglichen kann, sich auf einem Behälter zu positionieren.

9. Vorrichtung (10) nach einem der Ansprüche 1 bis 7, deren Körper (12) eine Form aufweist, die es ihr ermöglichen kann, sich an der Schnittfläche zwischen einem Quellenbehälter und einem Zielbehälter oder zwischen einem vorderen Anschlussstutzen und einem hinteren Anschlussstutzen zu positionieren.

10. Verwendung einer Vorrichtung (10) nach einem der Ansprüche 1 bis 8 als Verschluss.

11. Verwendung einer Vorrichtung (10) nach einem der Ansprüche 1 bis 7 und 9 als Ventil.

12. Verfahren zur Übertragung eines Fluids zwischen einem Quellenvolumenraum und einem Zielvolumenraum, wobei die zwei Volumenräume durch die als Ventil verwendete Vorrichtung (10) nach einem der Ansprüche 1 bis 7 und 9 getrennt werden, wobei das Verfahren Schritte enthält, die darin bestehen:
a) mittels des zu übertragenden Fluids einen ausreichenden Druck auf die Ventilklappe (14) des Ventils auszuüben, um die Öffnung der Ventilklappe (14) zu erlauben, was zu einem elastischen Unterspannungsetzen des Arms (16) des Ventils führt;
b) den Druck während einer ausreichenden Zeit aufrechtzuerhalten, um die Übertragung des gewünschten Fluidvolumens zu erlauben;
c) den Druck aufzuheben, um aufgrund der vom Arm (16) des Ventils ausgeübten elastischen Rückstellkraft die Rückkehr der Ventilklappe (14) in die geschlossene Stellung zu bewirken.

13. Verfahren zur Entnahme eines Teils einer in einem Behälter enthaltenen Flüssigkeitsprobe, der von einer als Verschluss verwendeten Vorrichtung (10) nach einem der Ansprüche 1 bis 8 verschlossen wird, wobei das Verfahren die Schritte enthält, die darin bestehen:
a) mit Hilfe einer Ansaug-/Fördervorrichtung einen Druck auf die Ventilklappe (14) des Verschlusses auszuüben, die sich in der geschlossenen Stellung befindet, um die Öffnung dieses letzteren zu erlauben, was zu einem elastischen Unterspannungsetzen des Arms (16) des Verschlusses führt;
b) die Ansaug-/Fördervorrichtung ins Innere des Behälters eindringen zu lassen, bis das Endstück der Ansaug-/Fördervorrichtung in die Flüssigkeitsprobe eingetaucht ist;
c) ein bestimmtes Volumen der Flüssigkeitsprobe anzusaugen;
d) die Ansaug-/Förder- oder Einführvorrichtung aus dem Behälter zu entfernen, so dass der auf die Ventilklappe (14) ausgeübte Druck aufgehoben wird, was die Rückkehr der Ventilklappe (14) in die geschlossene Stellung mit Hilfe der vom Arm (16) des Verschlusses ausgeübten elastischen Rückstellkraft bewirkt.

14. Verfahren zur Ausgabe einer Flüssigkeit ins Innere eines Behälters, der von einer als Verschluss verwendeten Vorrichtung (10) nach einem der Ansprüche 1 bis 8 verschlossen wird, wobei die Flüssigkeit in einer Ansaug-/Fördervorrichtung enthalten ist, wobei das Verfahren die Schritte enthält, die darin bestehen:
a) mit Hilfe einer Ansaug-/Fördervorrichtung einen Druck auf die Ventilklappe (14) des Verschlusses auszuüben, die sich in der geschlossenen Stellung befindet, um die Öffnung dieses letzteren zu erlauben, was zu einem elastischen Unterspannungsetzen des Arms (16) des Verschlusses führt;
b) die Ansaug-/Fördervorrichtung ins Innere des Behälters eindringen zu lassen;
c) ins Innere des Behälters ein bestimmtes Volumen der in der Ansaug-/Fördervorrichtung enthaltenen Flüssigkeit auszugeben;
d) die Ansaug-/Fördervorrichtung aus dem Behälter zu entfernen, damit der auf die Ventilklappe (14) ausgeübte Druck aufgehoben wird, was zur Rückkehr der Ventilklappe (14) in die geschlossene Stellung mit Hilfe der vom Arm (16) des Verschlusses ausgeübten elastischen Rückstellkraft führt.

## Claims

1. A flap device (10) of one-piece type, made of elastic material, which separates two distinct volume spaces, said device comprising:
a) A substantially cylindrical body (12), presenting a through conduit,
b) A flap (14) which seals the aperture of the through conduit of said body (12), when the device (10) is in a closed position, said flap (14) being positioned inside said body (12),
c) An arm (16) connecting the body (12) of said device to said flap (14), said arm (16) being in an elastic stress position, regardless of the position of said flap (14).

2. The device according to the preceding claim, wherein the arm (16) connects the body (12) of said device to said flap (14) through the through conduit of said body (12).

3. The device (10) according to one of the preceding claims, wherein the elastic material is taken from the group including: thermoplastic elastomers; cross-linked or vulcanised elastomers; silicones; fluorosilicones; fluorinated elastomers; polyisoprenes; natural butyl or nitrile rubbers; fluorocarbon polymers.

4. The device (10) according to one of the preceding claims, wherein the flap (14) is substantially flat.

5. The device (10) according to one of the preceding claims, wherein the flap (14) comprises deformation means (141), which facilitate the deformation of said flap (14).

6. The device (10) according to one of the preceding claims, wherein the body (12) comprises at least one peripheral lip (122).

7. The device (10) according to one of the preceding claims, wherein the flap (14) comprises means intended to facilitate the sliding of an object which allows said flap to open.

8. The device (10) according to one of the preceding claims, of which the body (12) has a shape capable of allowing it to be positioned on a container.

9. The device (10) according to one of claims 1 to 7, of which the body (12) has a shape capable of allowing it to be positioned at the interface between a source container and a destination container or between upstream tubing and downstream tubing.

10. Use of a device (10) according to one of claims 1 to 8, as a stopper.

11. The use of a device (10) according to one of claims 1 to 7 and 9, as a valve.

12. A method of transferring a liquid between a source volume space and a destination volume space, the two volume spaces being separated by device (10) according to one of claims 1 to 7 and 9, used as a valve, said method comprising the steps consisting of:
a) Exerting, by means of the liquid to be transferred, a pressure on the flap (14) of the valve which is sufficient to allow said flap (14) to open, causing the arm (16) of said valve to be placed under an elastic stress;
b) Maintaining the pressure for a period of time sufficient to allow the transfer of the desired volume of fluid;
c) Discontinuing the pressure in order to cause the flap (14) to return into the closed position, as a result of the elastic return force exerted by the arm (16) of said valve.

13. A method of taking a fraction from a liquid sample contained in a container, sealed by a device (10) according to one of claims 1 to 8, used as a stopper, said method comprising the steps consisting of:
a) Exerting a pressure by means of an aspiration/discharge device on the flap (14) of the stopper, which is in the closed position, in order to allow the latter to be opened, causing the arm (16) of said stopper to be placed under elastic stress;
b) Causing the aspiration/discharge device to penetrate into the container, until the tip of the aspiration/discharge device, is immersed in the liquid sample.
c) Aspirating a determined volume of said liquid sample;
d) Withdrawing the aspiration/discharge or insertion device from the container, such that the pressure exerted on the flap (14) is discontinued, causing the flap (14) to return into the closed position, due to the elastic return force exerted by the arm (16) of said stopper.

14. A method of dispensing a liquid into a container sealed by a device (10) according to one of claims 1 to 8, used as a stopper, said liquid being contained in an aspiration/discharge device, said method comprising the steps consisting of:
a) Exerting a pressure by means of an aspiration/discharge device on the flap (14) of the stopper, which is in the closed position, in order to allow the latter to be opened, causing the arm (16) of said stopper to be placed under an elastic stress;
b) Causing the aspiration/discharge device to penetrate into the container;
c) Dispensing into the interior of the container a determined volume of the liquid contained in the aspiration/discharge device;
d) Withdrawing the aspiration/discharge device from the container, such that the pressure exerted on the flap (14) is discontinued, causing the flap (14) to return into the closed position, due to the elastic return force exerted by the arm (16) of said stopper.
